# EUROPÄISCHE PATENTSCHRIFT

(11) **EP 1 277 968 B1**
(45) Veröffentlichungstag und Bekanntmachung des Hinweises auf die Patenterteilung: **15.12.2004**
(21) Anmeldenummer: 02015410.0
(22) Anmeldetag: 11.07.2002
(51) Int. Cl.: F15B 1/24

(54) **Entlüftungsverschluss für nach aussen entlüftete Kolbenspeicher**
Venting closure for external venting of a piston type accumulator
Fermeture d'évacuation de gaz vers l'exterieur d'un accumulateur à piston

(30) Priorität: 20.07.2001 DE 10135544
(43) Veröffentlichungstag der Anmeldung: 22.01.2003
(73) Patentinhaber: ROBERT BOSCH GMBH, 70442 Stuttgart (DE)
(72) Erfinder: Schepp, Rene, 71336 Waiblingen (DE); Schaefer, Ernst-Dieter, 74336 Brackenheim (DE); Ott, Harald, 71229 Leonberg (DE)

(56) Entgegenhaltungen:
- DE-A- 4 141 929
- DE-C- 967 721
- GB-A- 1 146 972
- US-A- 4 618 071
- US-A- 4 878 519

## Beschreibung

Die Erfindung betrifft Kolbenspeicher, insbesondere Gaskolbenspeicher, gemäß dem Oberbegriff des Anspruchs 1.

### Stand der Technik

Gattungsgemäße Gaskolbenspeicher sind unter anderem aus der DE 967 721 C, der DE 41 41 929 A1, der US 4,878,519, der US 4,618,071 und der GB 1 146 972 A bekannt. In der DE 24 19 224 A1 werden Flüssigkeitsdruckspeicher mit einem Mantel beschrieben, der eine zylindrische Innenwandung besitzt, einem in dem Mantel axial bewegbaren Kolben, der das Innere des Mantels in zwei Räume teilt, mit einem von dem Kolben getragenen, kombinierten Führungs- und Dichtungsring, der mit der Innenwandung des Mantels in gleitender Berührung steht und den Kolben führt und der von dem Kolben radial auswärts vorsteht, so dass er dem Ring benachbarte Teile des Kolbens im Abstand von der Innenwandung des Mantels hält. Des Weiteren ist an einem Ende des Mantels eine ringförmige Sitzfläche vorgesehen, die sich bei der Bewegung des Kolbens zu dem genannten einen Ende des Mantels hin dichtend an eine Fläche des kombinierten Ringes anlegen kann, so dass eine Strömung von Strömungsmittel auf der Außenseite des Kolbens zwischen den genannten Räumen verhindert wird.

Diese bekannten Kolbenspeicher weisen unter Anderem die Nachteile auf, dass bei Defekt der Dichtungen Gas über die Entlüftungsnut nach außen entweichen kann, außerdem kann bei Defekt der Dichtungen Flüssigkeit (Spritzwasser und so weiter) von außen nach innen eintreten.

Des Weiteren kann bei Defekt der Dichtungen an einem Kraftfahrzeug auch Bremsflüssigkeit nach außen dringen, was unter Umweltgesichtspunkten nicht erwünscht ist. Hinzu kommt, dass der Ringraum nur mittels einer komplizierten Verschlusstechnik (einer Spezialschraube) abgedichtet werden kann, was zur Folge hat, dass auch die Befüllung des Ringraums mit einer Sperrflüssigkeit sehr aufwendig ist.

Aus der US-A-4 681 071 und der GB-A-1 146 972 sind bereits gasdurchlässige und für Flüssigkeiten undurchlässige Verschlussstopfen an sich bekannt, die einen Gasaustausch ermöglichen und eine wirkungsvolle Sperre gegen den Hindurchtritt von Flüssigkeiten bieten sollen.

Die durch die vorgenannten Nachteile hervorgerufenen Probleme werden durch die Merkmale im kennzeichnenden Teil des Anspruchs 1 gelöst. Diese Lösung hat den Vorteil, dass bei Defekt der Dichtungen beziehungsweise Dichtanordnungen oder Dichtelemente einerseits Gas über die Entlüftungsnut nach außen entweichen, dass andererseits aber gleichzeitig Flüssigkeit (Spritzwasser und so weiter) nicht von außen nach innen eintreten kann. Des Weiteren kann bei Defekt der Dichtungen Bremsflüssigkeit nicht nach außen durchdringen, was insbesondere unter Umweltaspekten sehr vorteilhaft ist. Die Poren der filteraktive Schicht mit einer Porengröße im Nanometerbereich gestatten es dabei, eine scharfe Trenngrenze zu der zurückzuhaltenden Flüssigkeit einzuhalten.

Des Weiteren handelt es sich bei dem erfindungsgemäß in den Kanal eingebrachten gasdurchlässigen, Flüssigkeit abweisenden Verschlussstopfen um eine einfache Verschlusstechnik, sie bedarf nicht irgendwelcher aufwändiger Spezialschrauben oder Dichtelemente und ist somit entsprechend kostengünstig. Außerdem ist eine Befüllung mit der Sperrflüssigkeit über die Verschlussbohrung möglich und es kann außerdem auch die Sperrflüssigkeit über die Entlüftungsbohrung eingebracht werden.

Die erfindungsgemäße Lösung bietet also den Vorteil, dass der Ringraum von außen mit Sperrflüssigkeit ohne besondere Ventilanordnungen - wie es beim Stand der Technik üblich ist- befüllt werden kann und dass ein Leckgas aus dem Gasraum nach außen direkt in die Atmosphäre entweicht und nicht - wie beim Stand der Technik - in einen separat innerhalb des Kolbens anzuordnenden Raum entweichen muss.

Die Erfindung wird nachfolgend näher erläutert, wobei auf die beigefügten Zeichnung Bezug genommen wird. Es zeigen:
- Fig. 1: den Aufbau eines mit einem gasdurchlässigen und flüssigkeitsabweisenden Verschlussstopfen versehenen Kolbenspeichers zum Zeitpunkt des Zusammenbaus,
- Fig. 2: die Montage beziehungsweise das Einbringen von Sperrflüssigkeit mittels eines Befüllrüssels in den erfindungsgemäßen Kolbenspeicher,
- Fig. 3: im Detail den erfindungsgemäß eingesetzten gasdurchlässigen Verschlussstopfen und
- Fig. 4: den Schichtaufbau eines keramischen Materials eines erfindungsgemäßen gasdurchlässigen, flüssigkeitsabweisenden Verschlussstopfens.

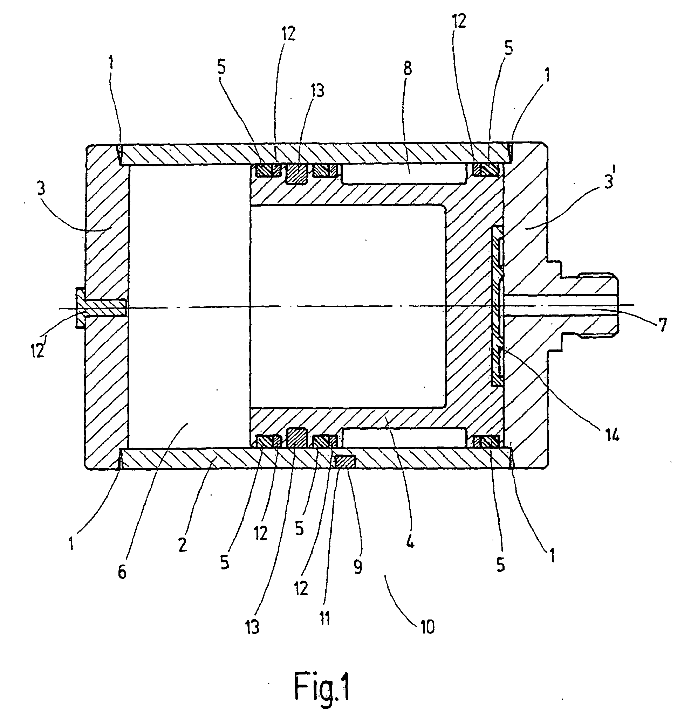

Die Figuren 1, 2 und 3 zeigen einen (Gas-)Kolbenspeicher 10 mit Schweißnähten 1 und mit einem gasdurchlässigen, flüssigkeitsabweisenden Verschlussstopfen 11. Der mit dem Stopfen 11 verschlossene Kolbenspeicher weist einen Gasraum 6 auf, einen Gasverschlussdeckel 3, einen Gasverschlussstopfen (reibverschweißt) 12', einen Kolben 4, eine Entlüftungsnut 8, eine Fluidzulaufbohrung 7, einen Fluidverschlussdeckel 3', ein Zylinderrohr 2, ein Dichtelement 5, einen Stützring 12, in einem Kanal 9 den gasdurchlässigen und flüssigkeitsabweisenden Verschlussstopfen 11, eine Sperrflüssigkeit sowie die zugehörige Nut 13 im Kolben 4, eine Dichtung 14, eine Abluftbohrung 15, eine weitere Abluftbohrung 16, eine ebene Stirnseite 17 des Verschlussstopfens 11 mit der speicherzugewandten Stirnseite des Verschlussstopfens 18 und eine ebene, rechtwinklige Längsachse des Verschlussstopfens 19.

Der in den Kanal 9 eingebrachte Verschlussstopfen 11 zeichnet sich - wie bereits vorstehend erwähntdadurch aus, dass er für Gase durchlässig ist, dass er jedoch flüssigkeitsabweisend ist, das heißt es findet nach außen kein messbarer Austausch von Flüssigkeit statt.

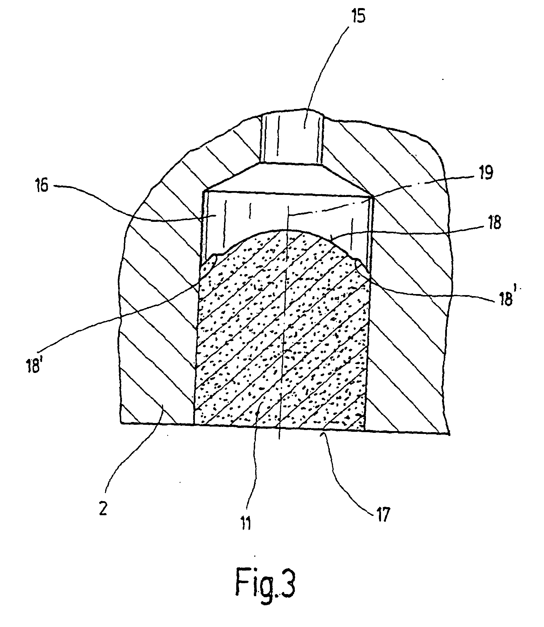

Der Verschlussstopfen 11 ist im Allgemeinen ein rotationssymmetrisches Bauteil. Er (vergleiche Figur 3) hat außenluftseitig eine ebene Stirnfläche 17. Diese Stirnfläche wird mit Hilfe eines Pressenstempels in das Zylinderrohr 2 bis zum Anschlag in die Abluftbohrung eingepresst. Die Stirnseite 18 des Stopfens kann rund, kegelförmig oder plan ausgestaltet sein. Der Stopfen ist stirnseitig mit einer Einführungsfase 18' versehen, um ein besseres Einführen in das Zylinderrohr zu erzielen.

Bei einer bevorzugten Ausführungsform des in den Kanal eingesetzten Verschlussstopfens 11 weist dieser eine mehrschichtige Membran 20 auf.

Bei einer ganz besonders bevorzugten Ausführungsform weist die mehrschichtige Membran eine filteraktive Schicht 21 mit Poren mit einer Porengröße im Nanometerbereich auf.

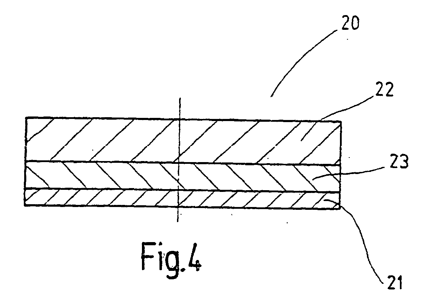

Vorzugsweise ist die Membran 20 auf der Basis eines keramischen Materials ausgebildet. Die Membran weist in diesem Falle einer ganz besonders bevorzugten Ausführungsform (Fig. 4) eine grobporöse Schicht 22 als Träger, eine Zwischenschicht 23 mit weniger grobporösen Anteilen und eine filteraktive Schicht 21 mit Poren im Nanometerbereich auf. Wenn die mehrschichtige Membran eine Membran auf der Basis eines keramischen Materials ist, hat dies den Vorteil, dass sie gegenüber hohen Belastungen im Vergleich zu anderen Materialien weniger verschleißanfällig ist.

Natürlich sind auch andere Formen der Struktur beziehungsweise des Aufbaus der Membran möglich. Der Verschlussstopfen kann nämlich ebenso aus einem speziell behandelten Sintermetall bestehen, das ebenfalls die gewünschten Eigenschaften wie Gasdurchlässigkeit und eine abweisende Eigenschaft für Flüssigkeiten hat.

Die bereits vorstehend erwähnte Ausführungsform auf der Basis eines keramischen Materials lässt es zu, die Porosität des keramischen Materials insbesondere im Nanometerbereich strikt zu steuern. Dies bedeutet, dass bei der erwähnten bevorzugten Ausführungsform der Ausführung des Verschlussstopfens mit einem keramischen porösen filteraktiven Material eine scharfe Trenngrenze zu der zu trennenden Flüssigkeit, beispielsweise Bremsflüssigkeit, eingehalten werden kann, während Gasmoleküle den Verschlussstopfen ungehindert durchdringen können.

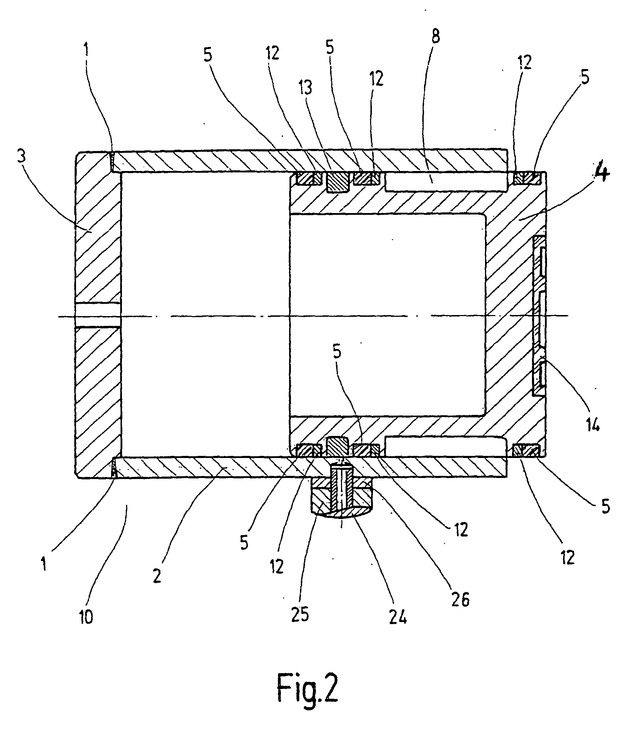

Nachfolgend wird unter Bezugnahme auf Fig. 2 das Befüllen des Kolbens mit Sperrflüssigkeit beschrieben. Vor der Montage des Gasverschlussdeckels 3 oder des Fluidverschlussdeckel 3' und der Verpressung des Verschlussstopfens wird der Kolben so zur Entlüftungsbohrung positioniert, dass die Sperrflüssigkeitsnut 13 gegenüber der Abluftbohrung beziehungsweise gegenüber dem Kanal 9 zu stehen kommt. Nun kann mit einem Befüllrüssel 24 oder ähnlichem (vergleiche Fig. 2) die Sperrflüssigkeit in den Raum der Kolbennut eingebracht werden. Der Befüllrüssel wird mittels eines Gegenhalters 25 fixiert, eine Dichtung 26 schützt vor Auslaufen. Anschließend werden der Verschlussstopfen 11 in einer Stellung, die ein Auslaufen der Kolbennut 13 nicht zulässt, und der jeweilige Verschlussdeckel 3 beziehungsweise 3' montiert.

Nachfolgend wird die Funktion des flüssigkeitsabweisenden, gasdurchlässigen Verschlussstopfens näher erläutert: Bei einer auftretenden Undichtheit der Dichtelemente 5 bzw. 12 am Kolben aus der Gasraumseite kann Gas über die Entlüftungsnut des Kolbens nach außen über die Abluftbohrung 15 beziehungsweise 16 durch den gasdurchlässigen Verschlussstopfen 11 gelangen. Da der Druck im Gasraum Werte größer als 90 bar erreichen kann, entsteht ein Partialdruckgefälle zwischen dem Raum der Entlüftungsnut und der außerhalb des Speichers herrschenden Atmosphäre. Dieses sorgt dafür, dass das Leckgas in die Atmosphäre treten kann. Somit wird auch sichergestellt, dass kein Gas den Bremskreislauf verseuchen kann.

Ein weiterer Vorteil der erfindungsgemäß vorgesehenen Anordnung ist, dass bei einem Defekt der Dichtelemente 5 beziehungsweise 12 auf der Fluidraumseite die in die Lüftungsnut gelangende Flüssigkeit durch die flüssigkeitsabweisende Eigenschaft des Verschlussstopfens nicht an die Umwelt abgegeben werden kann. Ebenso kann auch kein Spritzwasser von außen in den Speicher und somit in den Bremskreislauf gelangen.

## Patentansprüche

1. Kolbenspeicher (10) mit einem Zylinder (2), mit einem Deckel (3, 3'), mit einem in dem Zylinder (2) verschiebbaren Kolben (4), an dessen beiden Enden Dichtelemente beziehungsweise Dichtungsanordnungen (5) angeordnet sind, zum Unterteilen des Zylinders (2) in einen Gasraum (6), einen Flüssigkeitsraum und einen dazwischen liegenden ringartigen Zwischenraum (8), der in radialer Richtung vom Kolben (4) und einer Wand des Zylinders (2) begrenzt ist, und mit einem die Wand durchziehenden Kanal (9), der den ringartigen Zwischenraum (8) und eine den Kolbenspeicher (10) umgebende Atmosphäre verbindet, **dadurch gekennzeichnet, dass** in den die Wand durchziehenden Kanal (9) ein gasdurchlässiger und flüssigkeitsabweisender Verschlussstopfen (11) eingebracht ist, dass der gasdurchlässige und flüssigkeitsabweisende Verschlussstopfen (11) eine Membran (20) aufweist, und dass die Membran (20) eine filteraktive Schicht (21) mit Poren mit einer Porengröße im Nanometerbereich aufweist.

2. Kolbenspeicher nach Anspruch 1, **dadurch gekennzeichnet, dass** die Membran (20) mehrschichtig ist.

3. Kolbenspeicher nach Anspruch 1 oder 2, **dadurch gekennzeichnet, dass** die Membran (20) auf der Basis eines keramischen Materials ausgebildet ist.

4. Kolbenspeicher nach Anspruch 3, **dadurch gekennzeichnet, dass** die Membran (20) auf der Basis eines keramischen Materials eine Schichtstruktur mit einer grobporösen Keramikschicht (22), einer Keramik-Zwischenschicht (23) mit weniger grobporösen Anteilen und einer der filteraktiven Schicht (21) mit Poren mit einer Größe im Nanometerbereich aufweist.

5. Kolbenspeicher nach Anspruch 4, **dadurch gekennzeichnet, dass** die Schichtstruktur des keramischen Materials, bezogen auf die von innen nach außen verlaufende Gasströmungsrichtung, so ausgestaltet ist, dass die grobporöse Keramikschicht (22) zuallerinnerst liegt, gefolgt von der Keramik-Zwischenschicht (23) und der außenluftseitig liegenden Schicht (21) mit Poren im Nanometerbereich.

## Claims

1. Piston accumulator (10), with a cylinder (2), with a cover (3, 3'), with a piston (4) which is displaceable in the cylinder (2) and at the two ends of which are arranged sealing elements or seal arrangements (5) for subdividing the cylinder (2) into a gas space (6), a liquid space and a ring-like interspace (8) lying between these and delimited in the radial direction by the piston (4) and one wall of the cylinder (2), and with a duct (9) which passes through the wall and which connects the ring-like interspace (8) and an atmosphere surrounding the piston accumulator (10), **characterized in that** a gas-permeable and liquid-repelling plug (11) is introduced into the duct (9) passing through the wall, **in that** the gas-permeable and liquid-repelling plug (11) has a diaphragm (20), and **in that** the diaphragm (20) has a filter-active layer (21) with pores having a pore size in the nanometer range.

2. Piston accumulator according to Claim 1, **characterized in that** the diaphragm (20) is multilayered.

3. Piston accumulator according to Claim 1 or 2, **characterized in that** the diaphragm (20) is formed on the basis of a ceramic material.

4. Piston accumulator according to Claim 3, **characterized in that** the diaphragm (20) on the basis of a ceramic material has a layer structure with a coarsely porous ceramic layer (22), with a ceramic intermediate layer (23) having less coarsely porous fractions and with a filter-active layer (21) with pores having a size in the nanometer range.

5. Piston accumulator according to Claim 4, **characterized in that** the layer structure of the ceramic material is configured, with respect to the gas flow direction running from the inside outwards, in such a way that the coarsely porous ceramic layer (22) lies innermost, followed by the ceramic intermediate layer (23) and by the layer (21) lying on the outside-air side and having pores in the nanometer range.

## Revendications

1. Accumulateur à piston (10) comportant un cylindre (2) avec un couvercle (3, 3'),
un piston (4) coulissant dans le cylindre (2) et dont les deux extrémités comportent des éléments d'étanchéité ou des dispositifs d'étanchéité (5) pour subdiviser le cylindre (2) en une chambre à gaz (6), une chambre à liquide et un volume intermédiaire (8), annulaire, délimité dans la direction radiale par le piston (4) et une paroi du cylindre (2) ainsi qu'un canal (9) traversant la paroi, reliant le volume intermédiaire annulaire (8) et l'atmosphère entourant l'accumulateur à piston (10),
**caractérisé en ce que**
le canal (9) traversant la paroi comporte un bouchon (11) perméable aux gaz et refoulant le liquide, ce bouchon (11) ayant une membrane (20) qui comporte une couche de filtre actif (21) avec des pores ayant une dimension dans le domaine nanométrique.

2. Accumulateur à piston selon la revendication 1,
**caractérisé en ce que**
la membrane (20) est à plusieurs couches.

3. Accumulateur à piston selon la revendication 1 ou 2,
**caractérisé en ce que**
la membrane (20) est réalisée à base de matière céramique.

4. Accumulateur à piston selon la revendication 3,
**caractérisé en ce que**
la membrane (20) à base de matière céramique comporte une structure stratifiée ayant une couche de matière céramique (22) à pores grossiers, une couche intermédiaire (23) en matière céramique ayant des parties de pores moins grossières et une couche (21) de filtre actif avec des pores de la taille du domaine nanométrique.

5. Accumulateur à piston selon la revendication 4,
**caractérisé en ce que**
la structure stratifiée de la matière céramique est réalisée par rapport à la direction de passage des gaz qui la traversent de façon que la couche en matière céramique (22) de pores les plus grossiers se situe principalement à l'intérieur, et est suivie de la couche intermédiaire de matière céramique (23), et de la couche (21) exposée à l'air extérieur et ayant des pores dans le domaine nanométrique.
